# EUROPEAN PATENT APPLICATION

(11) **EP 3 323 337 A1**
(43) Date of publication of application: **23.05.2018**
(21) Application number: 16824446.5
(22) Date of filing: 11.07.2016
(51) Int. Cl.: A47L 9/16, B01D 45/12, B04C 5/26, B04C 11/00

(54) **DUST SEPARATION DEVICE AND ELECTRIC CLEANING APPARATUS**

(30) Priority: 13.07.2015 JP 2015139594
(71) Applicant: Toshiba Lifestyle Products & Services Corporation, Kawasaki-shi, Kanagawa 210-8543 (JP)
(72) Inventor: TAKAI, Yasushi, Ome-shi Tokyo 198-8710 (JP); SUZUKI, Hitoshi, Ome-shi Tokyo 198-8710 (JP); EBE, Kiyoshi, Ome-shi Tokyo 198-8710 (JP); KOJIMA, Kenji, Ome-shi Tokyo 198-8710 (JP)
(74) Representative: O'Connell, David Christopher
(86) International application number: PCT/JP2016/070474
(87) International publication number: WO 2017/010466

(57) **Abstract**

Proposed are an electric cleaning apparatus and a dust separation device for making it easy to clean a second centrifugal separator and perform a check afterward. The dust separation device 7 is provided with a first separator 35 that separates coarse dust from dust-containing air, and a second centrifugal separator 36 that centrifuges fine dust from the dust-containing air that passes through the first separation part 35. The second centrifugal separator 36 includes: a second-separation-chamber side-wall 82 that partitions off a second centrifugal separation chamber 65 that separates the fine dust; and a second separation chamber lid 81 that includes an outlet 71 through which air is discharged from the second centrifugal separation chamber 65, and that closes the second-separation-chamber side-wall 82 in a freely openable and closable manner.

## Description

### Field

Embodiments according to the present invention relate to a dust separation device and an electric cleaning apparatus.

### Background

There is known an electric cleaning apparatus equipped with a cyclone-type dust separation device that separates dust from the air by generating a swirl flow (a rotational flow) in a cylindrical dust container.

### Prior Art Document

### Patent Document

Patent Document 1: Japanese Unexamined Patent Application Publication No. 2014-14654

### Summary

### Problems to be solved by Invention

A conventional dust separation device includes a first centrifugal separator that separates and collects coarse dust and a second centrifugal separator that separates finer dust from the dust having passed through the first centrifugal separator to collect the separated finer dust.

This type of dust separation device has a cup-shaped transparent resin dust container as the outer shell of the first centrifugal separator. Since the transparent dust container allows a user to visually check accumulated amount of dust from the outside of the transparent dust container, it is easy for the user to judge when to dispose of the dust. In addition, the cup-shaped dust container can be easily washed with water when stains are conspicuous. Moreover, the transparent dust container facilitates check of a dry state.

Since the dust separated with the second centrifugal separator is powdery and fine, the dust separated with the second centrifugal separator is likely to adhere to an inner wall surface of the second centrifugal separator due to moisture and static electricity. When the adhered dust absorbs moisture and sticks to the inner wall surface, the separation performance of the second centrifugal separator is deteriorated and it is undesirable from the viewpoint of hygiene. Thus, it is preferable that the second centrifugal separator can also be cleaned by a method such as washing with water.

However, the second centrifugal separator separates powdery dusts finer than the dust separated with the first centrifugal separator, and thus, has a more complicated structure than the first centrifugal separator in general. Specifically, the second centrifugal separator requiring a centrifugal force higher than that of the first centrifugal separator is much smaller in diameter than the first centrifugal separator, whereas the second centrifugal separator needs to be equipped with an inlet of dust-containing air, an outlet, and a dust disposal port. Hence, it is difficult for the second centrifugal separator to be configured as such a shape that every corner inside the separation chamber(s) thereof can be cleaned and the cleaning state can be visually checked.

To solve the problems described above, it is an object of the present invention to provide an electric cleaning apparatus and a dust separation device each of which facilitates cleaning of the second centrifugal separator and the subsequent check.

### Means for solving Problem

To achieve the above object, an aspect of the present in vention provides a dust separation device including: a first se parator that separates coarse dust from dust-containing air; a nd a second centrifugal separator that centrifugally separates fine dust having passed through the first separator from air t hat contains the fine dust. The second centrifugal separator i ncludes; a separation-chamber wall that partitions a centrifug al chamber that separates the fine dust; and a separation-chamb er lid that is equipped with an outlet for allowing air to flow out from the centrifugal chamber and closes the separation-cha mber wall in a reopenable and reclosable manner.

It may be further desired that a hinge that openably and closably supports the separation-chamber lid.

It may be desired that the hinge includes: a bearing pro vided on the separation-chamber wall; and a shaft that is provi ded on the separation-chamber lid and is disengaged from the be aring to separate the separation-chamber lid from the separati on-chamber wall when the separation-chamber lid is opened to a predetermined angle or more.

It may be further desired that a locking mechanism that fixes the separation-chamber lid with the separation-chamber w all when the separation-chamber lid is closed around the hinge.

To achieve the above object, an aspect of the present in vention provides an electric cleaning apparatus including: a c leaner body; the dust separation device that is detachably prov ided on the cleaner body; and an electric blower that is accomm odated in the cleaner body and fluidly connected to the dust se paration device.

### Brief Description of Drawings

Fig. 1 is a perspective view of an electric cleaning apparatus according to an embodiment of the present invention.
Fig. 2 is a perspective view of a dust separation device according to the embodiment of the present invention.
Fig. 3 is a cross-sectional view of the dust separation device according to the embodiment of the present invention.
Fig. 4 is a cross-sectional view of a second centrifugal separator of the dust separation device according to the embodiment of the present invention.
Fig. 5 is a cross-sectional view illustrating a disassembled state of the dust separation device according to the embodiment of the present invention.
Fig. 6 is another cross-sectional view illustrating a further disassembled state of the dust separation device according to the embodiment of the present invention.
Fig. 7 is still another cross-sectional view illustrating a further disassembled state of the dust separation device according to the embodiment of the present invention.
Fig. 8 is still another cross-sectional view illustrating a further disassembled state of the dust separation device according to the embodiment of the present invention.

### Detailed Description

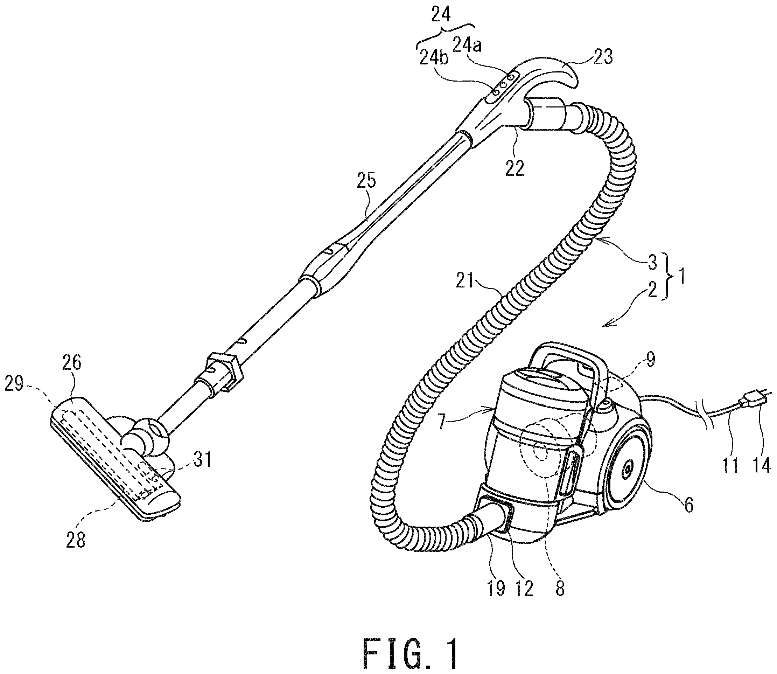

A dust separation device and an electric cleaning apparatus according to an embodiment of the present invention will be described by referring to Fig. 1 to Fig. 8.

Fig. 1 is a perspective view of an electric cleaning apparatus according to the embodiment of the present invention.

As shown in Fig. 1, the electric cleaning apparatus 1 according to the present embodiment is a so-called canister-type electric cleaner. The electric cleaning apparatus 1 includes a cleaner body 2 capable of running on the surface to be cleaned and a hose 3 detachably attached to the cleaner body 2. The hose 3 is fluidly connected to the cleaner body 2.

The cleaner body 2 includes a body housing 5, a pair of wheels 6 provided on the respective right and left sides of the body housing 5, a detachable dust separation device 7 arranged in the front half of the body housing 5, an electric blower 8 accommodated in the rear half portion of the body housing 5, a main controller 9 for mainly controlling the electric blower 8, and a power cord 11 for suppling electric power to the electric blower 8.

The cleaner body 2 drives the electric blower 8 by using the electric power supplied through the power cord 11, and causes the negative pressure generated by the driving of the electric blower 8 to act on the hose 3. The electric cleaning apparatus 1 sucks dust-containing air from the surface to be cleaned through the hose 3, separates dust from the dust-containing air, and collects and accumulates the separated dust so as to exhaust clean air from which the dust has been removed.

A body connection port 12 is provided in the front portion of the body housing 5. The body connection port 12 is a fluid inlet of the cleaner body 2. The body connection port 12 fluidly connects the hose 3 to the dust separation device 7.

Each of the wheels 6 is a running wheel of a large diameter and supports the cleaner body 2.

The dust separation device 7 separates dust from dust-containing air flowing into the cleaner body 2, collects and accumulates dust, while sending clean air from which dust has been removed to the electric blower 8.

In addition, the dust separation device 7 has a substantially cylindrical appearance as a whole. The dust separation device 7 is attached to the cleaner body 2 so as to lean against the cleaner body 2 with such a posture slightly inclined rearward that its bottom portion is biased to the front side with respect to the cleaner body 2 and its top portion is biased toward the rear side. The dust separation device 7 is detachably fixed with the cleaner body 2.

The electric blower 8 sucks air from the dust separation device 7 so as to generate negative pressure (i.e., suction vacuum pressure).

The main controller 9 includes a non-illustrated microprocessor and a non-illustrated storage device that stores parameters and various operation programs to be executed by the microprocessor. The storage device stores plural preset operation modes. The plural preset operation modes correspond to a user's operation to be received by the hose 3. Different input values (input values of the electric blower 8) are set for each operation mode. In accordance with a user's operation received by the hose 3, the main controller 9 alternatively selects an arbitrary operation mode corresponding to the operation content from the plural preset operation modes and reads out the selected operation mode from the storage device so as to control the operation of the electric blower 8 on the basis of the selected operation mode.

The power cord 11 supplies electric power to the cleaner body 2 from a non-illustrated AC power sockets (i.e., so-called outlet). An power plug 14 is provided at the free end of the power cord 11.

The hose 3 sucks dust-containing air from the surface to be cleaned by the negative pressure acting from the cleaner body 2, and leads the dust-containing air to the cleaner body 2. The hose 3 includes a connecting tube 19 detachably connected as a joint to the cleaner body 2, a dust collecting hose 21 fluidly connected to the connecting tube 19, a hand operation tube 22 fluidly connected to the dust collecting hose 21, a grip 23 protruding from the hand operation tube 22, an operation unit 24 provided on the grip 23, an extension tube 25 detachably connected to the hand operation tube 22, and a cleaning head 26 detachably connected to the extension tube 25.

The connecting tube 19 is the joint that is detachable with respect to the body connection port 12, and is fluidly connected to the dust separation device 7 through the body connection port 12.

The dust collecting hose 21 is a long, flexible, and substantially cylindrical hose. One end (i.e., the rear end in this case) of the dust collecting hose 21 is fluidly connected to the connecting tube 19. The dust collecting hose 21 is fluidly connected to the dust separation device 7 through the connecting tube 19.

The hand operation tube 22 relays the dust collecting hose 21 and the extension tube 25. One end (i.e., the rear end in this case) of the hand operation tube 22 is fluidly connected to the other end (i.e., the front end in this case) of the dust collecting hose 21. The hand operation tube 22 is fluidly connected to the dust separation device 7 through the dust collecting hose 21 and the connecting tube 19 in sequence.

The grip 23 is a portion that a user grips with the hand in order to operate the electric cleaning apparatus 1. The grip 23 protrudes from the hand operation tube 22 in an appropriate shape that can be easily grasped by a user's hand.

The operation unit 24 includes switches corresponding to the respective operation modes. Specifically, the operation unit 24 includes a stop switch 24a that receives a stopping operation of the electric blower 8 and a start switch 24b that receives a starting operation of the electric blower 8. The stop switch 24a and the start switch 24b are electrically connected to the main controller 9. A user of the electric cleaning apparatus 1 can operate the operation unit 24 to alternatively select one of the operation modes of the electric blower 8. The start switch 24b also functions as a selecting switch of the operation modes during operation of the electric blower 8. In this case, each time the main controller 9 receives an operation signal from the start switch 24b, the main controller 9 switches the operation mode in order of strong → medium → weak → strong → .... Instead of the start switch 24b, the operation unit 24 may be individually equipped with a weak operation switch, a medium operation switch, and a strong operation switch (not shown).

The extension tube 25 has a telescopic structure in which plural tubular bodies are superimposed, and is an elongated substantially cylindrical tube that can be expanded and contracted. A joint structure is provided at one end (i.e., the rear end in this case) of the extension tube 25, and this joint structure is detachable with respect to the other end (i.e., the front end in this case) of the hand operation tube 22. The extension tube 25 is fluidly connected to the dust separation device 7 through the hand operation tube 22, the dust collecting hose 21, and the connecting tube 19.

The cleaning head 26 can run or slide on the surface to be cleaned such as a wooden floor and a carpet, and has a suction port 28 on its bottom surface opposed to the surface to be cleaned in a running state or a sliding state. In addition, the cleaning head 26 includes a rotatable brush 29 arranged at the suction port 28 and an electric motor 31 for driving the rotatable brush 29. A non-illustrated joint structure is provided on one end portion (i.e., the rear end portion in this case) of the cleaning head 26, and this joint structure is detachable with respect to the other end portion (i.e., the front end portion in this case) of the extension tube 25. The cleaning head 26 is fluidly connected to the dust separation device 7 through the extension tube 25, the hand operation tube 22, the dust collecting hose 21, and the connecting tube 19. That is, the cleaning head 26, the extension tube 25, the hand operation tube 22, the dust collecting hose 21, the connecting tube 19, and the dust separation device 7 are a suction-air passage that is spatially connected from the electric blower 8 to the suction port 28.

The electric cleaning apparatus 1 starts up the electric blower 8 when the start switch 24b is operated. For instance, when the start switch 24b is operated under the state where the electric blower 8 is stopped, the electric cleaning apparatus 1 firstly drives the electric blower 8 in the strong operation mode. When the start switch 24b is operated again in the strong operation mode, the electric cleaning apparatus 1 drives the electric blower 8 in the medium operation mode. When the start switch 24b is operated three times (i.e., it is operated in the medium operation mode), the electric cleaning apparatus 1 drives the electric blower 8 in the weak operation mode. In this manner, every time the start switch 24b is operated, the above-described mode switching is repeated. The strong operation mode, the medium operation mode, and the weak operation mode are predetermined operation modes, and the input value to the electric blower 8 is small in order of the strong operation mode, the medium operation mode, and the weak operation mode. The electric blower 8 in operation discharges the air from the dust separation device 7 and sets the inside of the dust separation device 7 to a negative pressure (i.e., suction vacuum pressure).

The negative pressure of the dust separation device 7 sequentially passes through the body connection port 12, the connecting tube 19, the dust collecting hose 21, the hand operation tube 22, the extension tube 25, and the cleaning head 26 so as to act on the suction port 28. The electric cleaning apparatus 1 sucks dust on the surface to be cleaned together with air by the negative pressure acting on the suction port 28 so as to clean this surface. The dust separation device 7 separates dust from the dust-containing air sucked into the electric cleaning apparatus 1 and accumulates the separated dust, while sending clean air after separating the dust to the electric blower 8. The electric blower 8 discharges the air sucked from the dust separation device 7 to the outside of the cleaner body 2.

Next, the dust separation device 7 will be described in detail.

Although the dust separation device 7 shown in Fig. 1 is attached to the cleaner body 2 in a posture tilted rearward, hereinafter, the dust separation device 7 will be illustrated in an upright posture for the sake of simplifying the description.

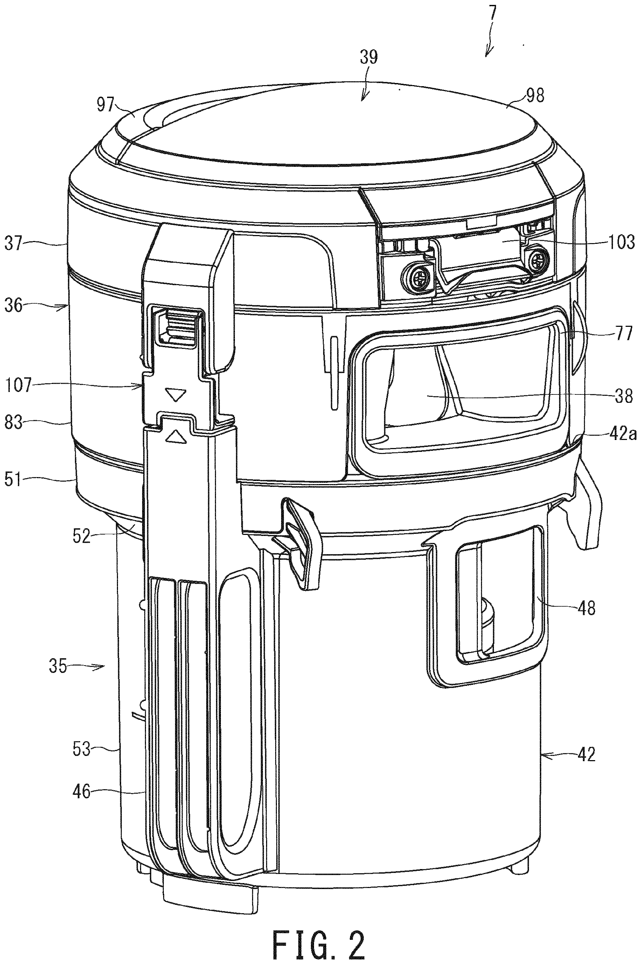

Fig. 2 is a perspective view of the dust separation device according to the embodiment of the present invention.

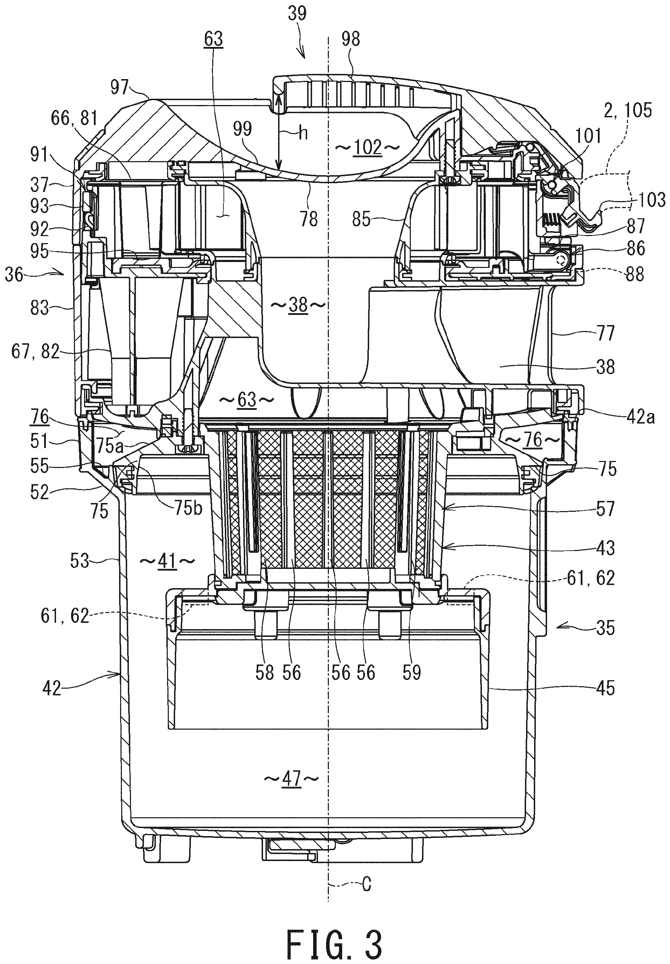

Fig. 3 is a cross-sectional view of the dust separation device according to the embodiment of the present invention.

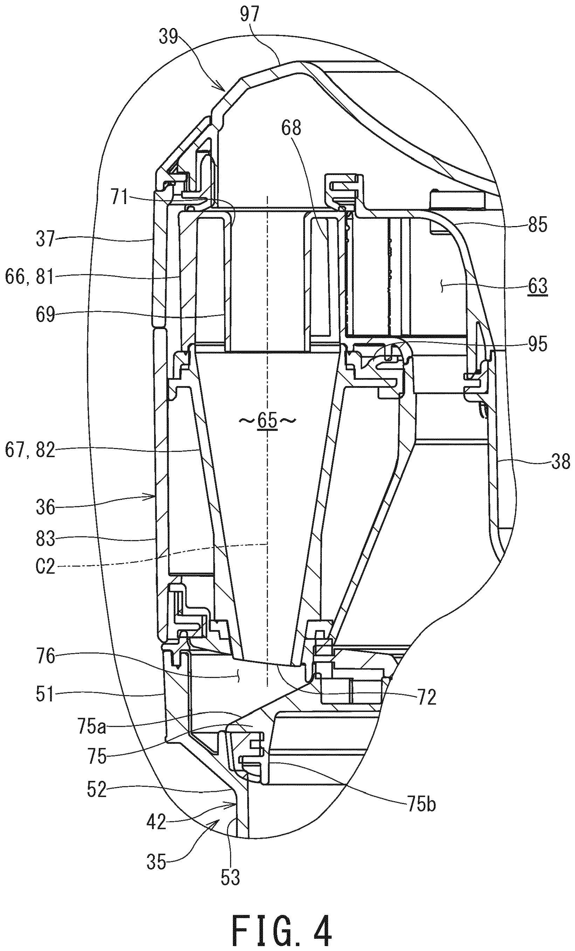

Fig. 4 is a cross-sectional view of a second centrifugal separator of the dust separation device according to the embodiment of the present invention.

As shown in Fig. 2 to Fig. 4, the dust separation device 7 of the electric cleaning apparatus 1 according to the present embodiment includes a first separator 35, a second centrifugal separator 36, and a second separator upper cover 37. The first separator 35 separates coarse dust from dust-containing air led to the dust separation device 7. The second centrifugal separator 36 centrifugally separates fine dust from the dust-containing air that has passes through the first separator 35 and contains fine dust. The second separator upper cover 37 is transparent or semi-transparent, and detachably covers the second centrifugal separator 36.

The dust separation device 7 includes an exhaust air passage 38 and a top cover 39 for covering the exhaust air passage 38. The exhaust air passage 38 sends the air having passed through the second centrifugal separator 36 to the electric blower 8.

The first separator 35 is arranged on one side (i.e., the lower half side) of the dust separation device 7. The second centrifugal separator 36, the second separator upper cover 37, the exhaust air passage 38, and the top cover 39 are arranged on the other side (i.e., the upper half side) of the dust separation device 7. The first separator 35 and the second centrifugal separator 36 are arranged adjacently in the vertical direction of the cylindrical dust separation device 7 so as to be stacked.

The first separator 35, the second centrifugal separator 36, the second separator upper cover 37, and the top cover 39 cooperate to form the appearance of the dust separation device 7 into a substantially cylindrical shape.

The coarse dust separated by the first separator 35 from dust-containing air is mainly fiber dust such as lint and fluff and dust with large mass such as sand grain. The fine dust separated by the second centrifugal separator 36 from dust-containing air is particulate and powdery dust with small mass.

The first separator 35 separates dust from dust-containing air in a centrifugal separation system (i.e., in a cyclonic separation). The first separator 35 includes a cup-shaped dust container 42 as an outer shell of the first centrifugal separation chamber 41, a cylindrical first filter 43 arranged in the dust container 42, and a dust capturing cup 45 that is arranged inside the dust container 42 and is connected to the first filter 43. The first separator 35 further includes a second handle 46 provided on the outer surface of the side wall of the dust container 42.

The dust container 42 is the outer shell of the lower half of the dust separation device 7, and also serves as the outer shell of the first centrifugal separation chamber 41 and the dust collecting chamber 47. At the side wall of the dust container 42, an inlet 48 is provided. The dust container 42 includes a large-diameter part 51 that is arranged at the open end portion, an inclined part 52 that is connected to the large-diameter part 51 and is narrowed to a small diameter, and a small-diameter part 53 that is connected to the inclined part 52 and reaches the bottom wall with a substantially uniform diameter dimension.

The connection part between the large-diameter part 51 and the small-diameter part 53, i.e., the inclined part 52 has an inclined surface 55 that narrows from the large-diameter part 51 toward the small-diameter part 53 inside the dust container 42.

The small-diameter part 53 is connected to the bottom wall of the dust container 42.

The first filter 43 is housed inside the dust container 42 so as to be substantially concentrically arranged. The annular space separating the first filter 43 and the dust container 42 is the first centrifugal separation chamber 41 that centrifugally separates coarse dust by rotating dust-containing air flowing into the first separator 35 from the inlet 48 of the dust container 42.

The first filter 43 is fixed with the second centrifugal separator 36, protrudes inside the dust container 42, and extends toward the bottom wall of the dust container 42. The first filter 43 fluidly connects the first centrifugal separation chamber 41 and the second centrifugal separator 36 so as to relay both. The first filter 43 includes a frame 57 that is equipped with plural bones 56 that are spaced apart from each other and arranged in a cylindrical shape, and a first mesh filter 58 that surrounds the frame 57 in a cylindrical shape. First openings 59 between each of the bones 56 of the frame 57 cause air to flow out from the first centrifugal separation chamber 41 to the second centrifugal separator 36. The side surface of the first filter 43 that is the first mesh filter 58 faces the inlet 48.

When a swirl flow is not sufficiently grown in the first centrifugal separation chamber 41 (e.g., immediately after startup of the electric blower 8 or during stop transient time of the electric blower 8), the first mesh filter 58 prevents coarse dust from flowing out from the first separator 35 to the second centrifugal separator 36. After the swirl flow is sufficiently grown, the first mesh filter 58 also prevents coarse dust from flowing out from the first separator 35 to the second centrifugal separator 36.

The first filter 43 does not necessarily require the first mesh filter 58 as long as can prevent an outflow of coarse dust to downstream. For instance, when the frame 57 of the first filter 43 is in the form of such fine grids that can prevent the passage of coarse dust or when the frame 57 has holes that are small enough to prevent passage of coarse dust, the first filter 43 does not necessarily require the first mesh filter 58.

The dust capturing cup 45 is provided at the end portion near the bottom wall of the dust container 42 of the first filter 43, i.e., at the protruding end portion or the lower end portion. The bottomed cylindrical dust capturing cup 45 has a bottom wall connected to the first filter 43 and a side wall extending toward the bottom wall of the dust container 42. In other words, the dust capturing cup 45 is opened toward the bottom wall of the dust container 42. The side wall of the dust capturing cup 45 faces the inner peripheral surface of the dust container 42 with a gap interposed therebetween. The dust catching cup 45 is larger in diameter than the first filter 43, and has a second opening 61 in the bottom wall connected to the first filter 43.

The space separating the dust capturing cup 45 from the dust container 42 is the dust collecting chamber 47 that accumulates dust separated by the first separator 35. The air inside the dust collecting chamber 47 returns to the first centrifugal separation chamber 41 through the second opening 61.

In the second opening 61, a second mesh filter 62 is provided. The second mesh filter 62 may be rough so that coarse dust (fibrous dust such as lint and fluff) flowing into the dust collection chamber 47 does not return to the first centrifugal separation chamber 41.

When the dust container 42 is detached from the dust separation device 7, the first filter 43 and the dust capturing cup 45 are taken out from the dust container 42 along with the second centrifugal separator 36.

The first separator 35 may be a filtration separation type using a filter or be an inertial separation type such as a straight separation type in which air and dust going straight are separated by difference in inertial force between both, in addition to the centrifugal separation type (cyclone type).

The second centrifugal separator 36 centrifuges fine dust from dust-containing air that has passed through the first separator 35. The second centrifugal separator 36 includes a relay air passage 63 that leads air having passed through the first centrifugal separation chamber 41, plural second centrifugal separation chambers 65 that separate fine dust from the air flowing in from the relay air passage 63, and the exhaust air passage 38 that leads the air flowing out of the second centrifugal separation chambers 65 to the electric blower 8 after the fine dust has been decomposed.

The second centrifugal separator 36 is detachably connected to the dust container 42 so as to close the open end 42a of the dust container 42. In addition, the second centrifugal separator 36 supports the first filter 43 and the dust capturing cup 45 on the center line C of the dust container 42.

The second separator upper cover 37 corresponding to the outer shell of the second centrifugal separator 36 has a cylindrical shape. Inside of the second separator upper cover 37, the plural second centrifugal separation chambers 65 are annularly arranged. Additionally, inside those annularly arranged second centrifugal separation chambers 65, the annular relay air passage 63 is arranged. Further, the exhaust air passage 38 is arranged on the extension line of the center line C of the dust container 42 inside the annular relay air passage 63 or on the center portion of the second cylindrical centrifugal separator 36. In other words, the second centrifugal separator 36 has a triple structure in which the annularly arranged second centrifugal separation chambers 65, the annular relay air passage 63, and the exhaust air passage 38 are arranged in this order from the side of the second separator upper cover 37.

The relay air passage 63 leads dust-containing air flowing in from the first filter 43 in a direction away from the dust container 42, and leads it to the second centrifugal separation chamber 65.

The plural second centrifugal separation chambers 65 are provided and are substantially annually arranged along the inner periphery of the cylindrical second separator upper cover 37 or surrounding the relay air passage 63. Each of the second centrifugal separation chambers 65 includes a cylindrical wall 66 for producing a swirl flow and a conical wall (i.e., cone wall) 67 for producing the swirl flow (helical flow).

As to each of the second centrifugal separation chambers 65, respective center lines of the cylindrical wall 66 and the conical wall 67 are substantially aligned on the same line and are hereinafter regarded as one common center line C2. This center line C2, i.e., the center line C2 of each second centrifugal separation chamber 65 is arranged parallel to the center line C of the cylindrical dust separation device 7. The center lines C2 of the respective second centrifugal separation chambers 65 may be radially inclined so as to form a conical surface that has a vertex at the side of the first separator 35 and expands toward the second centrifugal separator 36. In addition, when viewing the plural second centrifugal separation chambers 65 as a whole, the respective center lines C2 of the cylindrical walls 66 and conical walls 67 are arranged in a circle around the center line C of the dust separation device 7.

Further, each of the conical walls 67 has a large-diameter upper base and a lower base that is smaller in diameter than the upper base. The upper base of each conical wall 67 is arranged on the side far from the first separator 35, and the lower base of each conical wall 67 is arranged on the side closer to the first separator 35. Each cylindrical wall 66 has substantially the same diameter as the upper base of each conical wall 67, and is connected to the upper base of each conical wall 67.

Each cylindrical wall 66 is positioned on the far side of the first separator 35 than the corresponding conical wall 67. On the side wall of each cylindrical wall 66, an inlet 68 for dust-containing air is provided. Each inlet 68 is arranged on the center side of the dust separation device 7 (i.e., on the side surface of each cylindrical wall 66), and is connected to the relay air passage 63.

Each cylindrical wall 66 has a bottom plate at the position farthest from the first separator 35. On the bottom plate of each conical wall 67, an inner tube 69 extending along the center line in the corresponding cylindrical wall 66 is provided. The inside of each inner tube 69 is an outlet 71 for exhausting clean air separated from the dust-containing air in each second centrifugal separation chamber 65. The outlets 71 are connected to the exhaust air passage 38. The outer circumferential surface of each inner tube 69 faces the inlet 68. An annular space separating each inner tube 69 from each cylindrical wall 66 swirls the flow of the dust-containing air flowing in from each inlet 68.

Further, each cylindrical wall 66 is opened to the portion closest to the first separator 35, and is connected to the opening of the upper base of each conical wall 67.

Each conical wall 67 decreases in diameter towards the first separator 35. The upper base of each conical wall 67 has an opening spatially connected to the inside of each cylindrical wall 66, and introduces the swirl flow generated between each cylindrical wall 66 and each inner tube 69 so as to cause the swirl flow (helical flow) inside each conical wall 67. The bottom of each conical wall 67 has a waste port 72 connected to the dust container 42.

The respective second centrifugal separation chambers 65 introduce dust-containing air from the inlets 68. The dust-containing air flowing from the inlets 68 into the second centrifugal separation chambers 65 swirls (rotates) along the inner surfaces of the respective cylindrical walls 66 and generates the swirl flow (spiral helical flow) toward the waste ports 72 along the inner surface of the respective conical walls 67 such that fine dust is centrifugally separated from the dust-containing air. The separated fine dust is discharged from the waste ports 72 to the side of the dust container 42. The clean air from which the dust is separated flows on the center line C2 of each second centrifugal separation chamber 65, i.e., on the center line C2 of each cylindrical wall 66 and each conical wall 67, and passes through each inner tube 69 so as to flow out from each outlet 71 to the exhaust air passage 38.

A dust trapping umbrella 75 is provided ahead of the waste ports 72 of the respective second centrifugal separation chambers 65. The dust trapping umbrella 75 also serves as a partition wall that partitions the first separator 35 and the second centrifugal separator 36, and is provided at the base of the first filter 43. The outer diameter of the dust trapping umbrella 75 is smaller than the second centrifugal separator 36 and larger than the first filter 43. The dust trapping umbrella 75 has one surface 75a and the other surface 75b that tilts and spreads toward inside of the dust container 42. The one surface 75a of dust trapping umbrella 75 leads the fine dust discharged from the disposal ports 72 of the respective second centrifugal separation chambers 65 toward the dust container 42.

In addition, the dust trapping umbrella 75 is butted against the inclined part 52 of the dust container 42 so as to block the dust container 42. The large-diameter part 51 and the inclined part 52 of the dust container 42 and the dust trapping umbrella 75 partition a fine-dust collection chamber 76 that accumulates dust discharged from the second centrifugal separation chambers 65. The fine-dust collection chamber 76 is an annular space surrounded by the inner surface of the large-diameter part 51, the inclined surface of the inclined part 52, and the one surface 75a of the dust trapping umbrella 75. Specifically, the fine-dust collection chamber 76 has a substantially wedge-shaped cross-section that narrows as it is separated away from the disposal ports 72 of the respective second centrifugal separation chambers 65 (i.e., narrows as it goes away from the second centrifugal separation chambers 65).

The other surface 75b of the dust trapping umbrella 75 is larger in diameter than the first filter 43 and the dust capturing cup 45, and is expanded in diameter toward the first filter 43 and the dust capturing cup 45.

The exhaust air passage 38 is led toward the center portion of the second centrifugal separator 36 so as to cover the second centrifugal separation chamber 65 while being reduced in diameter from the outermost peripheral portion connected to the outlets 71, and enters the center portion of the relay air passage 63 on the center line C of the dust container 42. Additionally, the exhaust air passage 38 is bent from the portion surrounded by the plural second centrifugal separation chambers 65 in the direction intersecting the extension line of the center line C of the dust container 42 (i.e., the center line of the dust separation device 7), and reaches the second outlet 77 provided on the side wall of the second centrifugal separator 36. The exhaust air passage 38 is the farthest portion from the first separator 35, and has a recessed portion 78 recessed towards the first separator 35 at the portion adjacent to the top cover 39. The exhaust air passage 38 once directs the air flowing out from the outlets 71 of the second centrifugal separation chambers 65 to the first separator 35 by the recessed portion 78 while concentrating this air toward the center side of the dust separation device 7, and then changes the flowing direction of this air by a substantially right angle so as to exhaust this air from the second outlet 77.

Next, components constituting the second centrifugal separator 36 will be described.

The second centrifugal separator 36 includes a second-separation-chamber lid 81, a second-separation-chamber side-wall 82, and a second separator lower cover 83, and a partition wall 85 in addition to the second separator upper cover 37. The second-separation-chamber lid 81 includes the cylindrical walls 66 of the second centrifugal separation chambers 65. The second-separation-chamber side-wall 82 includes the conical walls 67 of the second centrifugal separation chambers 65. The second separator lower cover 83 functions as the outer shell of the second-separation-chamber side-wall 82. The partition wall 85 partitions the relay air passage 63 leading dust-containing air to the second centrifugal separation chambers 65 and the exhaust air passage 38 leading the air flowing out of the second centrifugal separation chambers 65 in an adjoining way.

The second-separation-chamber side-wall 82 partitions the majority of the second centrifugal separation chambers 65 that separate fine dust. The second-separation-chamber side-wall 82 includes the plural conical walls 67 arranged in an annular shape.

The second-separation-chamber lid 81 includes the outlets 71 for allowing air to flow out from the second centrifugal separation chambers 65, and closes the second-separation-chamber side-wall 82 openably and closably (i.e., in a reopenable and reclosable manner). The second-separation-chamber lid 81 includes the plural cylindrical walls 66 arranged in an annular shape, and has a size and shape that makes the cylindrical walls 66 match the respective conical walls 67 of the second-separation-chamber side-wall 82.

The side wall portions of the respective conical walls 67 having the inlets 68 may be provided on the second-separation-chamber side-wall 82. In this case, the second-separation-chamber lid 81 preferably includes the bottom plate portions having the outlets 71 of the conical walls 67 and the inner tubes 69 integrated with the bottom plate portions.

In addition, the walls defining the second centrifugal separation chambers 65 (i.e., the cylindrical walls 66 and the conical walls 67) may be configured such that at least the portion facing the inner surface of the second separator upper cover 37 (i.e., the second-separation-chamber lid 81 in the present embodiment) is transparent or translucent, and the same holds true for the second-separation-chamber side wall 82.

The second-separation-chamber lid 81 is provided in the second centrifugal separator 36 via a hinge 86. The hinge 86 openably and closably supports the second-separation-chamber lid 81 on the second-separation-chamber side-wall 82. The hinge 86 includes a bearing 87 provided on the second-separation-chamber side-wall 82 and a shaft 88 provided on the second-separation-chamber lid 81. The shaft 88 comes out of the bearing 87 so as to separate the second-separation-chamber lid 81 from the side of the second-separation-chamber side-wall 82 when the second-separation-chamber lid 81 is opened to a predetermined angle or more. The bearing 87 and the shaft 88 are paired and coaxially arranged. A non-illustrated notch is provided at the tip of the shaft 88. In addition, the bearing 87 is provided at a tip portion of a non-illustrated arm that elastically deforms. When the second-separation-chamber lid 81 is opened to the predetermined angle or more, the force of opening the second-separation-chamber lid 81 causes the notch of the shaft 88 to generate a thrust force in such a direction that the shaft 88 comes out of the bearing 87. As the result, the arm is elastically deformed by this thrust force such that the shaft 88 is disengaged from the bearing 87 and the second-separation-chamber lid 81 is separated from the second-separation-chamber side-wall 82.

In addition, the second-separation-chamber lid 81 is fixed with the second-separation-chamber side-wall 82 via a locking mechanism 91. The locking mechanism 91 fixes the second-separation-chamber lid 81 with the second-separation-chamber side-wall 82 when the second-separation-chamber lid 81 is closed around the hinge 86. The locking mechanism 91 includes a claw 92 provided on the second-separation-chamber lid 81 and a claw-receiving recess 93 provided on the second-separation-chamber side-wall 82. The claw-receiving recess 93 is caught by the claw 92 when the second-separation-chamber lid 81 is closed around the hinge 86.

The second separator upper cover 37 annularly surrounds the second-separation-chamber lid 81, and is a molded product of transparent or translucent resin.

The second separator lower cover 83 annularly surrounds the second-separation-chamber side-wall 82. The second separator lower cover 83 may be colored, transparent, or translucent.

The second separator upper cover 37 and the second-separator lower cover 83 cooperatively surround the second centrifugal separation chambers 65. When at least one of both (37 and 83) is transparent or translucent, it is possible to see through at least one of the second-separation-chamber lid 81 and the second-separation-chamber side-wall 82 that demarcate the second centrifugal separation chambers 65.

A packing 95 is provided between the second-separation-chamber side-wall 82 and the second-separation-chamber lid 81. The packing 95 is sandwiched between the connecting portion between each conical wall 67 and each cylindrical wall 66. The packing 95 closes the gap between each conical wall 67 and each cylindrical wall 66, and blocks the seam of the relay air passage 63.

The partition wall 85 fits into the inner edge of the second-separation-chamber lid 81, and separates the relay air passage 63 from the exhaust air passage 38. The partition wall 85 is fixed with the top cover 39.

The top cover 39 is integrated with the second separator upper cover 37. The top cover 39 includes a top plate 97 and a swingable handle 98 provided on the top plate 97. The top plate 97 closes the top portion of the second centrifugal separator 36.

The top plate 97 is provided with a recessed portion 99 that is recessed toward the second centrifugal separator 36. The recessed portion 99 is recessed corresponding to the recessed portion 78 of the exhaust air passage 38.

In addition, the top plate 97 is provided with a second hinge 101 that swingably supports the handle 98. The second hinge 101 is provided on the outer peripheral portion of the top plate 97. The second hinge 101 enlarges an opening height h of a gap 102 between the handle 98 and the top plate 97 by swinging the handle 98. In other words, the second hinge 101 makes it possible to set the opening height h of the gap 102 at the normal time lower than the average finger thickness. In this case, the second hinge 101 enlarges the opening height h of the gap 102 by swinging the handle 98 with a user's finger that enters the gap 102.

The handle 98 is provided at the top of the top cover 39 (i.e., at the top of the dust separation device 7). A user can firmly hold the dust separation device 7 by inserting fingers into the handle 98. The handle 98 partitions the gap 102, which is opened so as to enable a user to insert and remove the fingers, together with the recessed portion 99 of the top plate 97.

Further, the top cover 39 includes a clamp 103 that connects the dust separation device 7 to the cleaner body 2. The cleaner body 2 is provided with a locking pawl 105 that cooperates with the clamp 103 to fix the dust separation device 7 with the cleaner body 2.

The clamp 103 is disengaged from the locking pawl 105 so as to follow the handle 98 swinging in such a direction that the opening height h of the gap 102 is enlarged, and swings independently so as to be hooked by the locking pawl 105 in the case of attaching the dust separation device 7 to the cleaner body 2.

The clamp 103 connects the dust separation device 7 to the cleaner body 2, and releases the connection between the cleaner body 2 and the dust separation device 7 in conjunction with one operation, in which the handle 98 swings, to make the dust separation device 7 detachable from the cleaner body 2.

The top cover 39 is detachably fixed with a third locking mechanism 107 provided on the outer side surface of the second centrifugal separator 36, a non-illustrated claw provided on the rear surface of the top cover 39, and a non-illustrated claw-receiving recess that is provided on the second-separation-chamber lid 81 for hooking the claw.

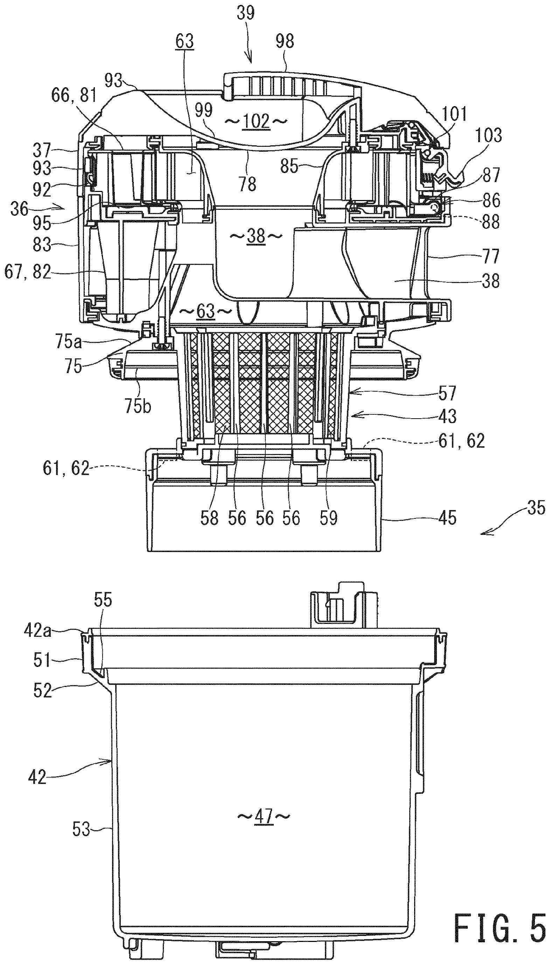

Fig. 5 to Fig. 8 are cross-sectional views illustrating respective disassembled states of the dust separation device according to the embodiment of the present invention.

First, by detaching the dust container 42 as shown in Fig. 5, the dust separation device 7 according to the present embodiment can discard dust collected by the first separator 35 and the second centrifugal separator 36. When the dust container 42 is detached, the coarse dust accumulated in the dust collecting chamber 47 by the first separator 35 and the fine dust accumulated in the fine-dust collection chamber 76 by the second centrifugal separator 36 gather in the dust container 42 so as to be discarded from the dust separation device 7 at once. When the dust container 42 becomes dirty, the dust container 42 can be cleaned by, e.g., rinsing it with water.

Note that the dust container 42 is detachably fixed with the second centrifugal separator 36 with a non-illustrated second locking mechanism provided on the second handle 46.

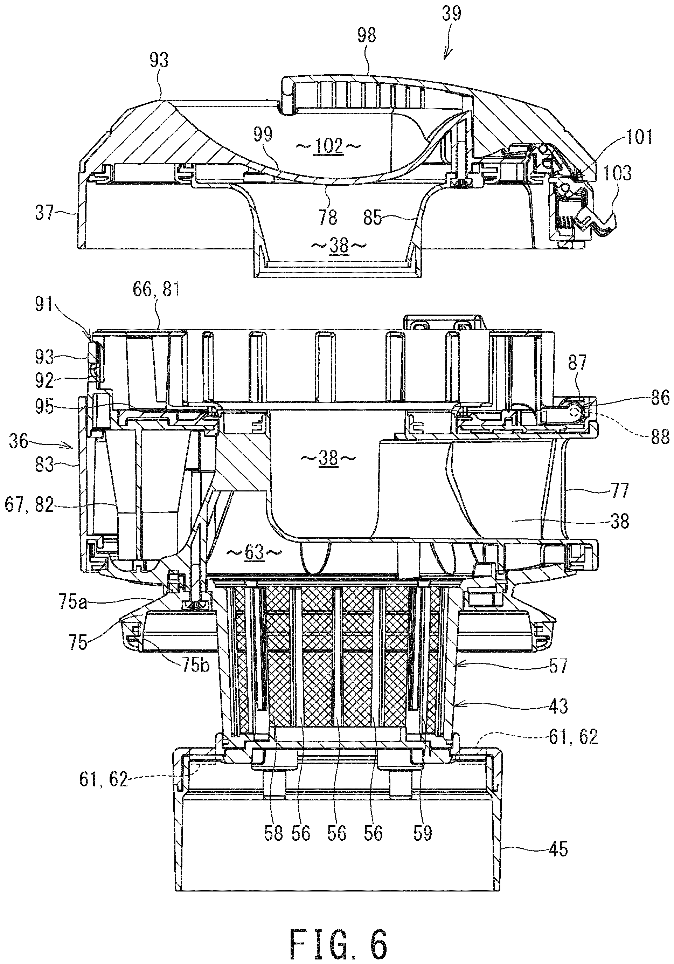

Next, by removing the top cover 39 as shown in Fig. 6, the dust separation device 7 according to the present embodiment exposes the second-separation-chamber lid 81 that demarcates the second centrifugal separation chambers 65. Since the second separator upper cover 37 is integrated with the top cover 39, the second-separation-chamber lid 81 is exposed when the top cover 39 is detached.

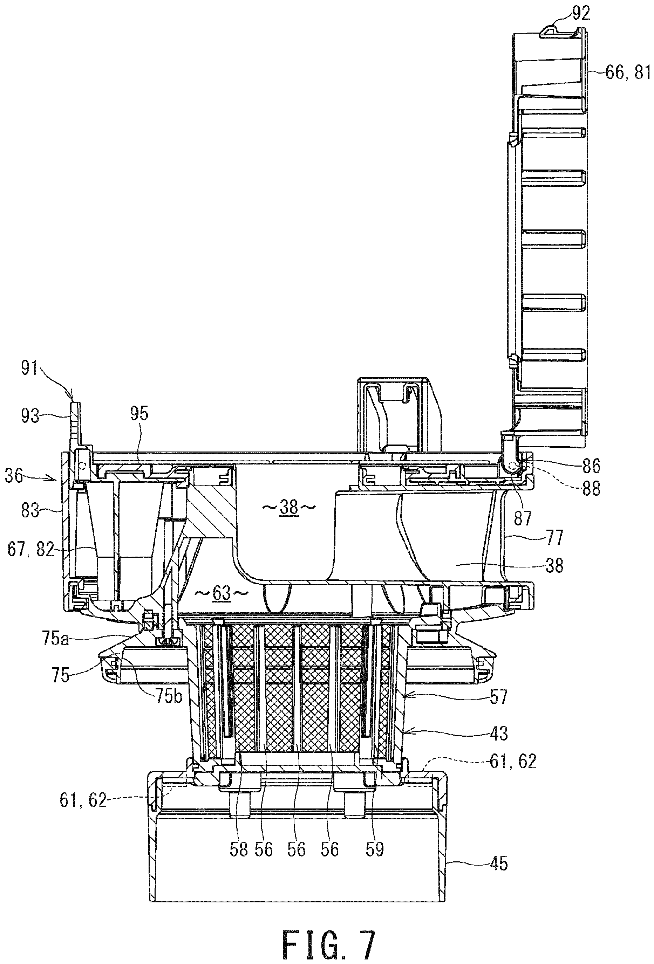

Next, when the locking mechanism 91 is released to swing the second-separation-chamber lid 81 as shown in Fig. 7, the dust separation device 7 according to the present embodiment opens the second centrifugal separation chambers 65.

By opening the second-separation-chamber lid 81, the inside of the cylindrical walls 66 and the inside of the conical walls 67 in the second centrifugal separation chambers 65 are exposed and can be directly cleaned in such a manner that a user can visually check the cleaning state to every corner.

At this time, the dust separation device 7 connects both of the second-separation-chamber lid 81 and the second-separation-chamber side-wall 82 with each other via the hinge 86, and thus both are not disassembled and can be handled as one body.

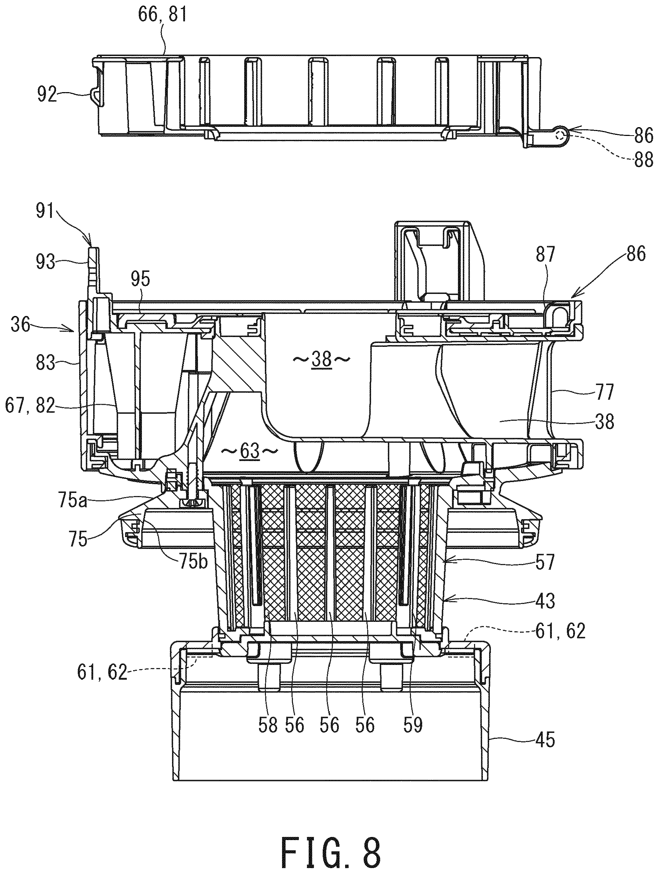

Next, when the second-separation-chamber lid 81 is opened to the predetermined angle or more as shown in Fig. 8, the shaft 88 of the dust separation device 7 according to this embodiment comes out from the bearing 87 of the hinge 86 such that the second-separation-chamber lid 81 and the second-separation-chamber side-wall 82 are separated and divided. In this state, though the second centrifugal separator 36 is divided into plural parts so as to increase its complexity of handling, easiness of cleaning both components increases and each component can be independently dried. Thus, for instance, it becomes possible to separately orient each component in a direction that facilitates ventilation.

The dust separation device 7 can be easily assembled in the reverse order (in the order of Fig. 8, Fig. 7, Fig. 6, Fig. 5) after cleaning and drying are completed.

Each of the dust separation device 7 and the electric cleaning apparatus 1 according to the present embodiment includes the second-separation-chamber side-wall 82 partitioning the second centrifugal separation chambers 65, and the second-separation-chamber lid 81 that is equipped with the outlets 71 for flowing out air from the second centrifugal separation chambers 65 and openably and closably closes the second-separation-chamber side-wall 82. Consequently, a user can clean the second centrifugal separation chambers 65 while visually checking the inner state thereof, and can also visually check the state after cleaning.

Additionally, each of the dust separation device 7 and the electric cleaning apparatus 1 according to the present embodiment includes the hinge 86. Consequently, a user can clean the second-separation-chamber side-wall 82 and the second-separation-chamber lid 81 while handling them together. As a result, it is possible to reduce the labor of handling a large number of components separately.

Further, each of the dust separation device 7 and the electric cleaning apparatus 1 according to the present embodiment can separate the second-separation-chamber lid 81 from the second-separation-chamber side-wall 82 by the hinge 86 in the case of opening the second-separation-chamber lid 81 to the predetermined angle or more. Consequently, respective components can be cleaned more reliably.

Moreover, each of the dust separation device 7 and the electric cleaning apparatus 1 according to the present embodiment includes the locking mechanism 91. Consequently, the second-separation-chamber side-wall 82 and the second-separation-chamber lid 81 are configured to be freely opened and closed by the hinge 86, while both are reliably fixed such that air leakage in the second centrifugal separation chambers 65 can be reliably prevented.

Therefore, the dust separation device 7 and the electric cleaning apparatus 1 of the embodiment of the present invention, cleaning of the second centrifugal separator 36 and the subsequent check can be facilitated.

Incidentally, the electric cleaning apparatus 1 according to the present embodiment is not limited to a canister type but may be another type such as an upright type, a stick type, and a handy type.

While certain embodiment has been described, this embodiment has been presented by way of example only, and is not intended to limit the scope of the inventions. Indeed, the novel embodiment described herein may be embodied in a variety of other forms; furthermore, various omissions, substitutions and changes in the form of the embodiment described herein may be made without departing from the spirit of the inventions. The accompanying claims and their equivalents are intended to cover such forms or modifications as would fall within the scope and spirit of the inventions.

### Reference Signs

- 1: electric cleaning apparatus
- 2: cleaner body
- 3: hose
- 5: body housing
- 6: wheel
- 7: dust separation device
- 8: electric blower
- 9: main controller
- 11: power cord
- 12: body connection port
- 14: power plug
- 19: connecting tube
- 21: dust collecting hose
- 22: hand operation tube
- 23: grip
- 24: operation unit
- 24a: stop switch
- 24b: start switch
- 25: extension tube
- 26: cleaning head
- 28: suction port
- 29: rotatable brush
- 31: electric motor
- 35: first separator
- 36: second centrifugal separator
- 37: second separator upper cover
- 38: exhaust air passage
- 39: top cover
- 41: first centrifugal separation chamber
- 42: dust container
- 42a: open end
- 43: first filter
- 45: dust capturing cup
- 46: second handle
- 47: dust collecting chamber
- 48: inlet
- 51: large-diameter part
- 52: inclined part
- 53: small-diameter part
- 55: inclined surface
- 56: bone
- 57: frame
- 58: first mesh filter
- 59: first opening
- 61: second opening
- 62: second mesh filter
- 63: relay air passage
- 65: second centrifugal separation chamber
- 66: cylindrical wall
- 67: conical wall
- 68: inlet
- 69: inner tube
- 71: outlet
- 72: waste port
- 75: dust trapping umbrella
- 75a: one surface
- 75b: other surface
- 76: fine-dust collection chamber
- 77: second outlet
- 78: recessed portion
- 81: second-separation-chamber lid
- 82: second-separation-chamber side-wall
- 83: second separator lower cover
- 85: partition wall
- 86: hinge
- 87: bearing
- 88: shaft
- 91: locking mechanism
- 92: claw
- 93: claw-receiving recess
- 95: packing
- 97: top plate
- 98: handle
- 99: recessed portion
- 101: second hinge
- 102: gap
- 103: clamp
- 105: locking pawl
- 107: third locking mechanism

## Claims

1. A dust separation device comprising:
a first separator that separates coarse dust from dust-containing air; and
a second centrifugal separator that centrifugally separates fine dust having passed through the first separator from air that contains the fine dust,
wherein the second centrifugal separator includes;
a separation-chamber wall that partitions a centrifugal chamber that separates the fine dust; and
a separation-chamber lid that is equipped with an outlet for allowing air to flow out from the centrifugal chamber and closes the separation-chamber wall in a reopenable and reclosable manner.

2. The dust separation device according to claim 1, further comprising a hinge that openably and closably supports the separation-chamber lid.

3. The dust separation device according to claim 2,
wherein the hinge includes:
a bearing provided on the separation-chamber wall; and
a shaft that is provided on the separation-chamber lid and is disengaged from the bearing to separate the separation-chamber lid from the separation-chamber wall when the separation-chamber lid is opened to a predetermined angle or more.

4. The dust separation device according to claim 2 or claim 3, further comprising a locking mechanism that fixes the separation-chamber lid with the separation-chamber wall when the separation-chamber lid is closed around the hinge.

5. An electric cleaning apparatus comprising:
a cleaner body;
the dust separation device according to any one of claim 1 to claim 4 that is detachably provided on the cleaner body; and
an electric blower that is accommodated in the cleaner body and fluidly connected to the dust separation device.
